# EUROPEAN PATENT SPECIFICATION

(11) **EP 0 519 929 B1**
(45) Date of publication and mention of the grant of the patent: **23.04.1997**
(21) Application number: 91902224.4
(22) Date of filing: 10.01.1991
(51) Int. Cl.: B60R 9/048, B60R 9/052, B60R 9/058

(54) **VEHICLE ROOF RACK**
DACHGEPÄCKTRÄGER FÜR FAHRZEUGE
GALERIE PORTE-BAGAGES POUR VEHICULES

(30) Priority: 10.01.1990 AU 8147/90
(43) Date of publication of application: 30.12.1992
(73) Proprietor: GOODCART PTY. LIMITED, Mona Vale, NSW 2103 (AU)
(72) Inventor: RAWSON-HARRIS, Douglas, Bayview, NSW 2104 (AU)
(74) Representative: KOHLER SCHMID + PARTNER
(86) International application number: AU9100010
(87) International publication number: WO9110581

(56) References cited:
- AU-B- 1 030 183
- AU-B- 1 219 583
- DE-A- 3 619 673
- DE-A- 3 805 930
- DE-B- 1 205 852
- US-A- 4 239 139
- US-A- 4 295 588
- US-A- 4 372 470
- US-A- 4 501 385
- US-A- 4 944 439

## Description

### Technical Field of the Invention

This invention relates to load carrying racks for vehicles and in particular roof racks for use with automobiles and specifically concerns a vehicle roof rack comprising a bar adapted to extend across the roof of a vehicle to each end of which is attached an end member, being adapted to be secured to the vehicle, wherein the bar is of uniform shape throughout its length, and is shaped such that when said bar is connected to said vehicle, said bar acts as an inverted aerofoil, a portion of each end member being pushed into the bar, the bar including on its upper surface a longitudinally extending groove being adapted to slidingly receive any one of a variety of inserts for use in the attachment of articles to the bar.

### Background Art

In order to enable goods to be carried on the roof of a motor car, it is common practice to provide removable roof racks in the form of bars, usually two, which extend transversely across the roof of the car being secured at either end either by clamping to the roof gutter or to the roof itself.

These roof racks are usually formed with circular, oval, ellipsical or square cross-section bars so as to give sufficient mechanical strength to bear the load to be carried. When such roof racks are in place on a moving vehicle, however, air moving over and around these racks or bars creates substantial wind noise. In severe cases these racks may even alter the performance of the motor vehicle in terms of handling, fuel economy etc. due to the disturbance of the normally smooth airflow over the vehicle.

In addition, while these prior art roof racks provide sufficient mechanical strength, their bulky appearance is unsightly especially when compared to the sleek lines of a high performance sports car for example.

A further problem with previously designed roof racks is the way in which accessories intended to facilitate the securing of loads, are attached to the rack. Normally, devices such as clamps, belts etc. are attached to the roof rack by external fastenings such as bolts e.g., U-bolts, welding etc. Such attachment methods contribute to the unsightly appearance of the roof rack and increase wind noise generated by the rack.

US 4 501 385 discloses an aerodynamically shaped bar with an upper groove. A bracket slides within the bar below the groove to engage a threaded member for attaching an insert at a desired position along the bar. In this manner, an insert can be located at an arbitrary position along the bar. However, a plurality of separate parts must be produced and assembled in order to effect attachment to the bar.

In an effort to ameliorate the disadvantages of the prior art, it is proposed to provide a roof rack which offers a choice over the prior art and which, at least in the preferred embodiments, has particular aesthetic appeal and has minimal effect on airflow over the roof of the vehicle thus reducing air resistance and wind noise.

### Disclosure of the Invention

This purpose is achieved in accordance with the invention in that the bar includes engagement means below said groove comprising a second longitudinally extending groove formed with a series of longitudinally extending fine ridges adapted to engage the threads of a screw for fixing said insert at a desired position along said bar.

In a first aspect, the present invention comprises a vehicle roof rack comprising a bar of uniform cross-section throughout its length, said bar being adapted to extend across a roof of a vehicle, each end of said bar being adapted to be attached to said vehicle wherein, said cross-section is shaped such that when said bar is connected to said vehicle, said bar acts as an inverted aerofoil.

In a second aspect, the present invention comprises a vehicle roof rack comprising a bar of uniform cross-section throughout its length, said bar being adapted to extend across the roof of said vehicle, each end of said bar being adapted to be attached to said vehicle, wherein said bar includes on its upper surface a longitudinally extending groove adapted to slidingly receive an insert for use in attaching articles to said bar, engagement means being provided below said groove for locating said insert at a desired position along said bar.

In a third aspect, the present invention consists in a roof rack comprising a bar adapted to extend across the roof of a vehicle to each end of which is attached an end member being adapted to be secured to the vehicle, wherein said bar is an extruded section of uniform shape throughout its length, portions of each end member being a push fit into the extruded section, the extruded section including on its upper surface a longitudinal extending groove, being adapted to receive slidingly any one of a variety of inserts for use in the attachment of articles to the bar, the section including a portion below the said groove providing a means for the engagement of screws from said inserts at any one of a large number of positions along the length of the bar, whereby said inserts may be located at a variety of positions along the bar.

The present invention provides a roof rack which, in use, is substantially quieter than previous roof racks due to the smooth passage of air over and around the rack.

Also, the internal fitment of accessories for attaching articles to the bar, allows these accessories to be easily moved along the bar and provides greater security from theft than previously used external fittings.

The streamlined nature of the rack along with the provision for internally attaching accessories, produces a roof rack with high aesthetic appeal, blending in neatly with the aerodynamic design of most of today's automobiles.

In a preferred embodiment, the engagement means comprises a second longitudinally extending groove adapted to receive a fastening means for fixing said insert at a desired position along said bar. In another embodiment, said bar is extendible. Such an extendible bar may be used on vehicles with varying roof widths.

In a further embodiment, the ends of said bar are adapted to receive end members, said end members being removably attached to said vehicle.

In yet a further embodiment, said insert comprises a lockable holder means being adapted to receive resilient gripping means to secure articles to said bar.

In yet another embodiment, said second longitudinally extending groove is formed with a series of longitudinally extending fine ridges being adapted to engage the threads of said screw.

In still another embodiment, said insert comprises a tab with an aperture therethrough, said tab normally residing within said groove, at least a portion of said tab being displaceable upwardly to expose said aperture above an upper surface of said bar.

In yet another embodiment, said engagement means comprises a plurality of downwardly extending threaded bores.

In a further embodiment, said second longitudinally extending groove includes a plurality of fastening means slidable within said second groove.

In still a further embodiment, set fastening means comprises threaded screws or bolts.

### Brief Description of Drawings

In order that the nature of the present invention may be more clearly understood, preferred embodiments of the invention will now be described, by way of example only, with reference to the accompanying drawings in which:-
Fig. 1 is a perspective view of a roof rack according to a first embodiment of the present invention;
Fig. 2 is a perspective view of a roof rack according to a second embodiment of the present invention;
Fig. 3 is a cross-sectional view of a rack bar according to the present invention;
Fig. 4 is an exploded perspective view of the rack bar of Fig. 2, together with accessories for attaching articles to the rack;
Figs. 5-5D are perspective views of various accessories for attaching articles to the roof rack;
Fig. 6 is an exploded perspective view of the end member of Fig. 1; and
Fig. 7 is a perspective view of a roof rack according to a third embodiment of the present invention.

### Industrial Applicability

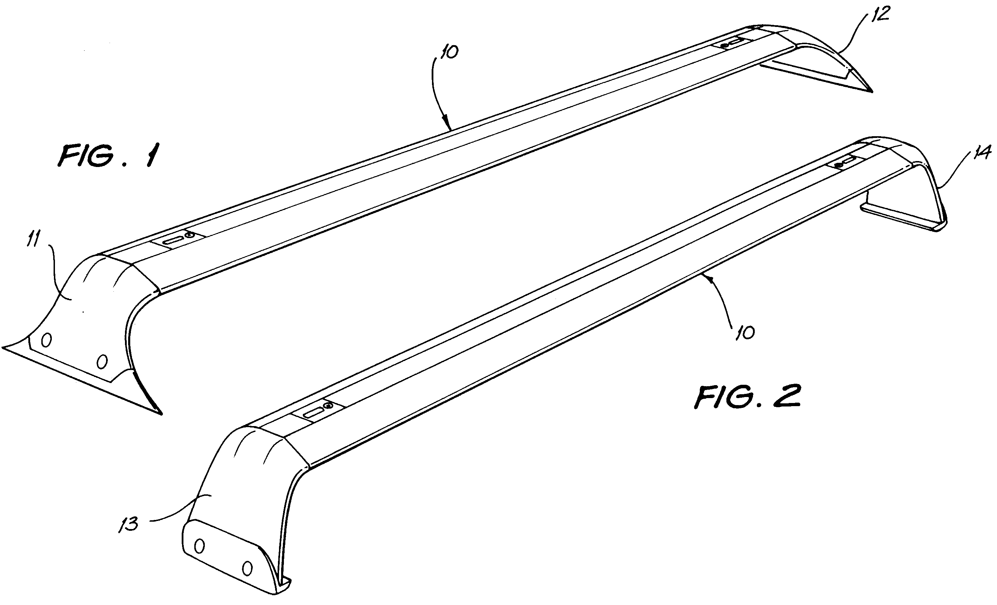

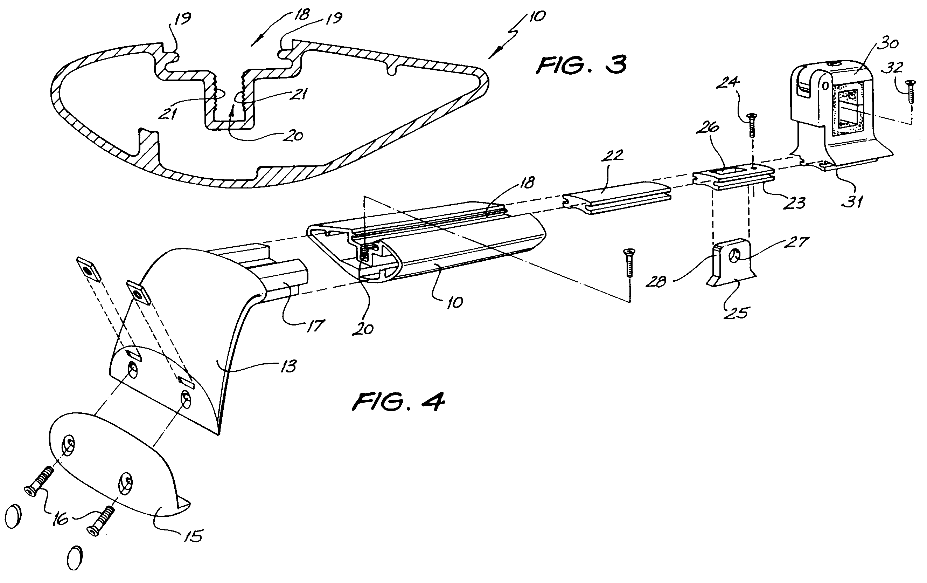

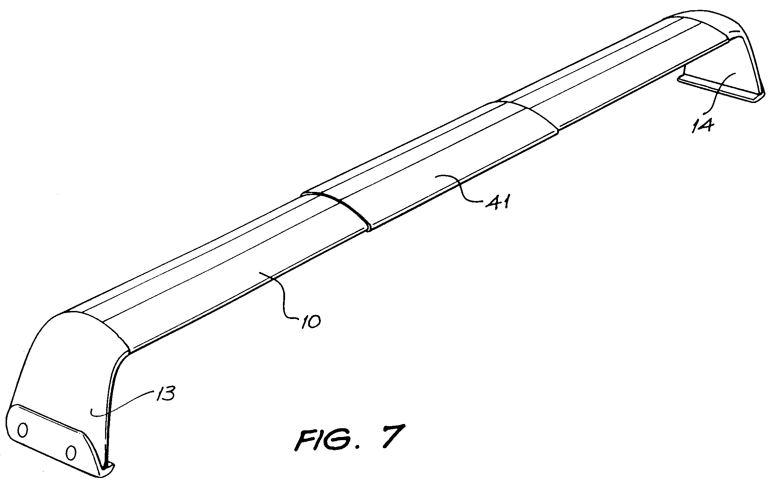

As shown in Figs. 1 and 2, a vehicle roof rack according to the present invention comprises a bar 10 adapted to extend transversely across the roof of a motor vehicle, particularly a car, and end members such as 11 and 12 of Fig. 1 or 13 and 14 of Fig. 2. The end members 11 and 12 are intended for direct attachment to a vehicle roof in the manner illustrated and described in Fig. 6. End members 13 and 14, however, are intended for attachment to the roof gutter of a car, as shown in Fig. 4.

Fig. 3 shows a cross-section of a bar 10 in accordance with the present invention. The bar 10 is of constant cross-section throughout its length. Bar 10 is shaped such that when in place on a moving vehicle, it acts as an inverted aerofoil.

To explain, when bar 10 is in place on a moving vehicle, air passes over the section from the left to the right of Fig. 3. Air passing over the upper surface of bar 10 travels slower than air passing under the bottom surface of the bar since the upper surface is shorter than the lower surface. The bar section 10 therefore acts in a matter inverse to that of an aircraft wing and a pressure differential is produced causing a downward pressure to be exerted on the bar. This downward pressure assists in reliable connection of the rack to the vehicle. Additionally, the aerodynamic shape of the bar 10 considerably reduces wind noise as compared to previous roof racks and the smooth flow of air over the bar reduces possible adverse effects on the performance of the vehicle to which the bar 10 is attached.

A further aspect of the present invention lies in the method of connecting various accessories to bar 10. Bar 10 includes longitudinally extending groove 18 which extends the entire length of bar 10, as shown in Fig. 4. Groove 18 is adapted to slidingly receive a variety of accessories to facilitate attachment of articles to the rack.

One such accessory comprises strip 23 and lug 25. Strip 23 is adapted to be slidingly received in groove 18, small grooves in the sides of strip 23 engaging tongues 19 formed on the sides of groove 18 (see Fig. 3). Fastening means 24, in this case a screw, locates and fixes strip 23 at a desired position on bar 10 by engaging a second longitudinal groove 20, below groove 18. In this case, groove 20 has sidewalls formed with a series of ridges 21 which mate with the threads of screw 24. It should be noted, however, that the present invention also envisages groove 20 as including any means to engage fastening means 24 such as a plurality of nuts which may be slidable in groove 20 and mate with screw or bolt 24 or alternatively a plurality of threaded holes extending downwardly from groove 18.

Once strip 23 is in the desired position on bar 10, lug 25 which preferably has an aperture 27 therethrough, may be press fitted through aperture 26 in strip 23. This lug would normally rest with its upper surface level with strip 23. It may, however, be raised by hand or by engaging recess 28 with a screwdriver for example, to expose aperture 27. A rope or any other device may then be used in conjunction with aperture 27 to attach articles to bar 10.

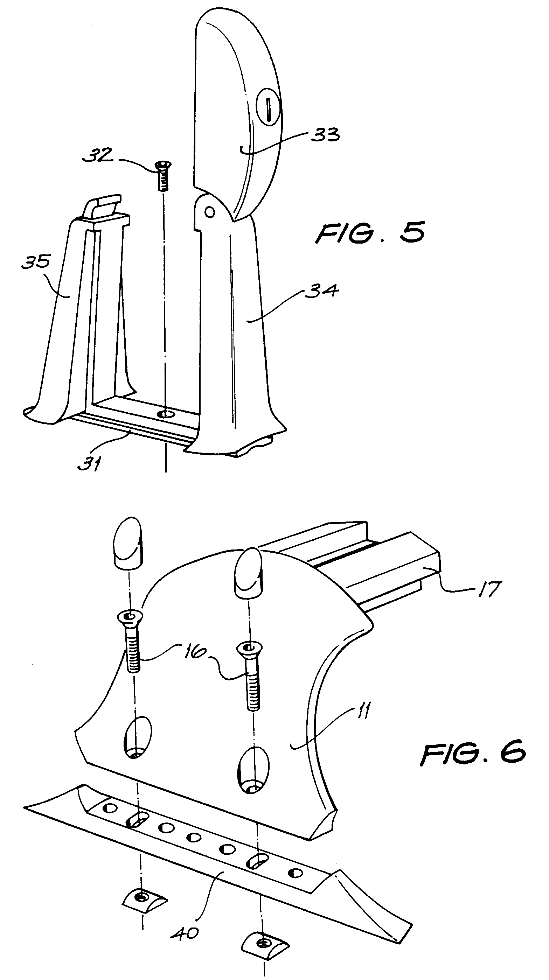

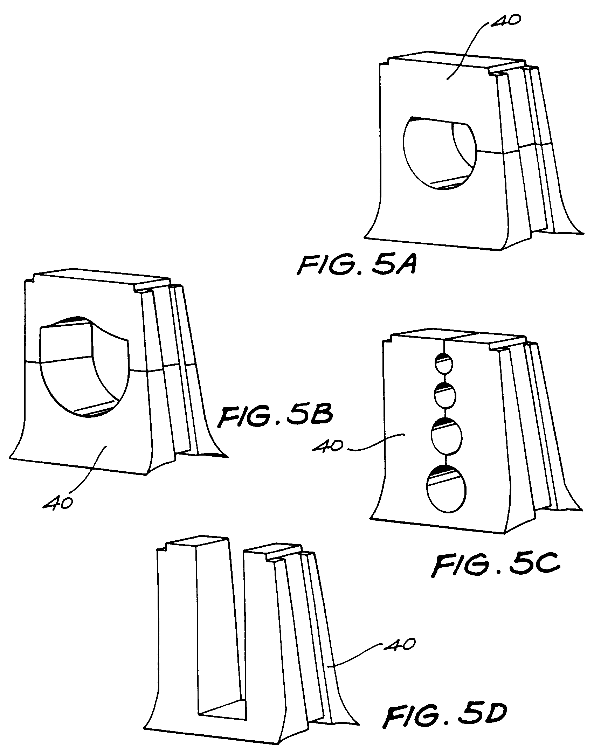

Another type of accessory to facilitate attachment of articles to bar 10, is holder 30 which is shown more clearly in Fig. 5. The bottom surface 31 of holder 30 is slidable in groove 18. The holder may be fixed at a desired position by means of screw 32 in a manner similar to that described above in relation to fastening means 24.

Turning to Fig. 5, the holder 30 comprises bottom surface 31 and uprights 34 and 35 connected at their upper ends by lockable member 33. Holder 30 is formed so as to receive a variety of inserts 40 to grip various articles. Examples of these inserts 40 are shown in Figs. 5A to 5D. These inserts, usually made from rubber, synthetic rubber or similar resilient material may be formed to reliably grip various articles such as pushbikes (Fig. 5A), mountain bikes (Fig. 5B), fishing rods (Fig. 5C) and skis (Fig. 5D). All inserts are preferably split at one point so that they may be opened to receive the article to be carried. The insert is slidably received between uprights 34 and 35 and the holder 30 locked by member 33 to securely attach the article to bar 10.

By connecting these accessories to the bar 10 at a position below groove 18, no attachment points are exposed. This not only reduces wind noise due to the smooth flow of air over the rack, it also increases the security of the attached articles since it is difficult to easily gain access to the attachment points.

As shown in Fig. 4, those portions of groove 18 which are not covered by accessories, may be covered by strip 22 to prevent entry of foreign objects or water into grooves 18 and 20 thereby enhancing the aesthetic appeal of the rack and ensuring a smooth flow of air over the upper surface of bar 10.

Figs. 4 and 6 show preferred embodiments of end members 13 and 11 respectively, for attachment of bar 10 to a vehicle.

In Fig. 4, end member 13 comprises gutter engaging portion 15 threadably secured by means of screws 16. Protrusions 17 provide a tight push fit into the end of bar 10.

In Fig. 6, end member 11 also comprises protrusions 17 but is connected to rail member 40 by means of screws 16, rail member 40 being permanently connected to the roof of a vehicle by any appropriate means.

Fig. 7 shows a third embodiment of the present invention in which bar 10 comprises two pieces joined by sleeve member 41 such that bar 10 is extendible to allow the rack to be used on several different vehicles.

From the foregoing it should be apparent that the invention encompasses an advantageous advantage in the art or at least a commercial alternative to the prior art. Further, it should be clear that the invention may be embodied in other specific forms without departing from the scope of invention as defined in the appended claims. The present embodiments, therefore, are to be considered in all respects as illustrative and not restrictive.

## Claims

1. A vehicle roof rack comprising a bar (10) adapted to extend across the roof of a vehicle to each end of which is attached an end member (11, 12), being adapted to be secured to the vehicle, wherein the bar (10) is of uniform shape throughout its length, and is shaped such that when said bar (10) is connected to said vehicle, said bar (10) acts as an inverted aerofoil, a portion of each end member (11, 12) being pushed into the bar (10), the bar (10) including on its upper surface a longitudinally extending groove (18) being adapted to slidingly receive any one of a variety of inserts for use in the attachment of articles to the bar (10),
characterized in that
the bar (10) includes engagement means below said groove (18) comprising a second longitudinally extending groove (20) formed with a series of longitudinally extending fine ridges (21) adapted to engage the threads of a screw (24) for fixing said insert at a desired position along said bar (10).

2. A roof rack as claimed in claim 1, wherein said end members (11, 12) are removably attached to said vehicle.

3. A roof rack as claimed in anyone of the preceding claims, wherein said insert comprises a lockable holder means adapted to receive resilient gripping means to secure articles to said bar (10).

4. A roof rack as claimed in anyone of the preceding claims, wherein said insert comprises a tab with an aperture (27) therethrough, at least a portion of said tab being displaceable from a position below an upper surface of said bar (10) to a position above said bar (10) to expose said aperture (27).

5. A roof rack as claimed in anyone of the preceding claims, wherein the engagement means comprises a plurality of downwardly extending threaded bores.

6. A roof rack as claimed in anyone of the preceding claims, wherein said bar (10) is extendable.

## Patentansprüche

1. Fahrzeugdachträger mit einer Stange (10), die so angepaßt ist, daß sie sich quer über das Dach eines Fahrzeugs erstreckt, wobei an jedem ihrer Enden ein Endelement (11, 12) befestigt ist, welches so angepaßt ist, daß es an dem Fahrzeug befestigt werden kann, wobei die Stange (10) über ihre ganze Länge hinweg eine einheitliche Form hat und so geformt ist, daß, wenn die Stange (10) mit dem Fahrzeug verbunden ist, die Stange (10) als umgekehrte Tragfläche wirkt, wobei ein Abschnitt jedes Endelements (11, 12) in die Stange (10) geschoben wird, wobei die Stange (10) an ihrer oberen Fläche eine sich in Längsrichtung erstreckende Nut (18) aufweist, die für eine gleitende Aufnahme eines beliebigen einer Mehrzahl von Einsätzen zur Verwendung bei der Befestigung von Gegenständen an der Stange (10) angepaßt ist,
dadurch gekennzeichnet,
daß die Stange (10) eine Eingriffseinrichtung unter der Nut (18) mit einer zweiten sich in Längsrichtung erstreckenden Nut (20) aufweist, die mit einer Reihe von sich in Längsrichtung erstreckenden feinen Kanten (21) gebildet ist, die so angepaßt sind, daß sie in das Gewinde einer Schraube (24) eingreifen, um den Einsatz in einer gewünschten Position entlang der Stange (10) zu befestigen.

2. Dachträger nach Anspruch 1, dadurch gekennzeichnet, daß die Endelemente (11, 12) lösbar mit dem Fahrzeug verbunden sind.

3. Dachträger nach einem der vorhergehenden Ansprüche, dadurch gekennzeichnet, daß der Einsatz eine verschließbare Halteeinrichtung aufweist, die für die Aufnahme einer federnden Greifeinrichtung zum Befestigen von Gegenständen an der Stange (10) angepaßt ist.

4. Dachträger nach einem der vorhergehenden Ansprüche, dadurch gekennzeichnet, daß der Einsatz einen Lappen mit einer durch diesen hindurchgehenden Öffnung (27) aufweist, wobei mindestens ein Abschnitt des Lappens von einer Position unterhalb einer oberen Fläche der Stange (10) in eine Position oberhalb der Stange (10) verschoben werden kann, um die Öffnung (27) freizulegen.

5. Dachträger nach einem der vorhergehenden Ansprüche, dadurch gekennzeichnet, daß die Eingriffseinrichtung eine Mehrzahl von sich nach unten erstreckenden Gewindebohrungen aufweist.

6. Dachträger nach einem der vorhergehenden Ansprüche, dadurch gekennzeichnet, daß die Stange (10) verlängerbar ist.

## Revendications

1. Porte-bagages pour toit de véhicule comprenant une barre (10) qui est adaptée pour s'étendre en travers du toit d'un véhicule et à chaque extrémité de laquelle est attaché un élément d'extrémité (11, 12), qui est adapté pour être fixé au véhicule, porte-bagages dans lequel la barre (10) est de forme uniforme sur sa longueur et est façonnée de façon que, lorsque la barre (10) est reliée au véhicule, la barre (10) agit comme une surface portante inversée, une partie de chaque élément d'extrémité (11, 12) étant poussée dans la barre (10), la barre (10) comportant sur sa surface supérieure une gorge (18) qui s'étend longitudinalement et qui est adaptée pour recevoir de manière coulissante l'un quelconque d'un grand nombre d'éléments insérés à utiliser dans la fixation d'articles à la barre (10),
caractérisé en ce que la barre (10) comprend des moyens d'engagement en dessous de la gorge (18) comportant une deuxième gorge (20) qui s'étend longitudinalement et qui est formée avec une série de fines nervures (21) s'étendant longitudinalement et adaptées pour entrer en prise avec les filets d'une vis (24) en vue de la fixation de l'élément inseré en une position souhaitée le long de la barre (10).

2. Porte-bagages pour toit suivant la revendication 1, caractérisé en ce que les éléments d'extrémité (11, 12) sont attachés de manière amovible au véhicule.

3. Porte-bagages pour toit suivant l'une quelconque des revendications précédentes, caractérisé en ce que l'élément inséré comprend un moyen de retenue verrouillable qui est adapté pour recevoir des moyens de serrage élastiques en vue de fixer des articles à la barre (10).

4. Porte-bagages pour toit suivant l'une quelconque des revendications précédentes, caractérisé en ce que l'élément inséré comprend une patte pourvue d'un orifice (27) à travers elle, au moins une partie de la patte étant déplaçable depuis une position en dessous d'une surface supérieure de la barre (10) jusqu'à une position au-dessus de ladite barre (10) pour exposer ledit orifice (27).

5. Porte-bagages pour toit suivant l'une quelconque des revendications précédentes, caractérisé en ce que les moyens d'engagement comprennent un grand nombre de trous taraudés qui s'étendent vers le bas.

6. Porte-bagages pour toit suivant l'une quelconque des revendications précédentes, caractérisé en ce que la barre (10) est extensible.
